Europäisches Patentamt

European Patent Office

Office européen des brevets

(11) Publication number: **0 179 578**
**B1**

(12) # EUROPEAN PATENT SPECIFICATION

(45) Date of publication of patent specification: **04.07.90**

(21) Application number: **85306875.7**

(22) Date of filing: **27.09.85**

(51) Int. Cl.⁵: **B 01 J 33/00,** B 01 J 37/02,
B 01 J 35/04, B 01 J 21/06,
B 01 D 53/36

(54) Method of increasing the operational life of a catalyst.

(30) Priority: **22.10.84 US 663539**

(43) Date of publication of application:
**30.04.86 Bulletin 86/18**

(45) Publication of the grant of the patent:
**04.07.90 Bulletin 90/27**

(84) Designated Contracting States:
**DE FR GB**

(56) References cited:
GB-A-2 029 720
GB-A-2 070 958
US-A-3 873 469
US-A-4 189 404
US-A-4 271 044
US-A-4 414 139

(73) Proprietor: **FORD MOTOR COMPANY LIMITED**
**Eagle Way**
**Brentwood Essex CM13 3BW (GB)**

(84) **GB**

(73) Proprietor: **FORD-WERKE**
**AKTIENGESELLSCHAFT**
**Ottoplatz 2 Postfach 21 03 69**
**D-5000 Köln 21 (DE)**

(84) **DE**

(73) Proprietor: **FORD FRANCE SOCIETE ANONYME**
**344 Avenue Napoléon Bonaparte B.P. 307**
**F-92506 Rueil Malmaison Cedex (FR)**

(84) **FR**

(72) Inventor: **Gandhi, Haren Sakarlal**
**28836 Creek Bend Drive**
**Farmington Hills Michigan 48018 (US)**
Inventor: **Shelef, Modecai**
**3033 Morningview Terrace**
**Birmingham Michigan 48010 (US)**
Inventor: **Logothetis, Eleftherios Miltiadis**
**110 Aspen**
**Birmingham Michigan 48009 (US)**
Inventor: **Williamson, William Burton**
**264 Surrey Heights**
**Westland Michigan 48184 (US)**

Courier Press, Leamington Spa, England.

# EP 0 179 578 B1

(72) Inventor: **Peters, Charles Richard**
**16051 Middlesbury Drive**
**Dearborn Michigan 48120 (US)**
Inventor: **Kaiser, William Joseph**
**27977 Gettysburg**
**Farmington Hills Michigan 48018 (US)**

(74) Representative: **Messulam, Alec Moses et al**
**A. Messulam & Co. 24 Broadway**
**Leigh on Sea Essex SS9 1BN (GB)**

## Description

The present invention relates to a method of increasing the operational life of a catalyst. In particular, the method finds utility in increasing the operational life of a catalyst which may be deactivated by lead. Lead can be a contaminant carried in the exhaust gas stream generated by burning a lead containing fuel in a combustion process.

Lead is a material which is sometimes contained in fuel used in an internal combustion engine. The lead can be an additive in order to increase the octane value of the fuel, and it also can serve as a lubricant to increase the operational life of moving parts of the internal combustion engine. Though some vehicles particularly in the United States of America are designed to run on unleaded fuel, even such fuels may still pick up trace amounts of lead during their manufacture, transportation and storage prior to delivery to the fuel tank associated with an internal combustion engine. Therefore, it is desirable to have some protection for a catalyst system associated with an internal combustion engine in order to protect it from amounts of lead contained in unleaded fuel.

As an additional matter, catalysts are now being proposed for use with internal combustion engines on motor vehicles in Europe. It is expected that at least in the beginning the petrol sold in Europe will have a higher amount of lead contained therein than is contained in the lead-free petrol sold in the United States of America. In some European countries unleaded fuels may not be available. Therefore, it is extremely important for European catalyst system to be so manufactured that they have a higher tolerance for trace amounts of lead in the fuel burnt.

The method proposed herein is one which increases the operational life of a catalyst which may be deactivated by lead. In particular, the method of this invention is designed to increase the operational life of a catalyst which may be deactivated by small amounts of lead contained in petrol burned in an internal combustion process, the exhaust gases from that burning process being treated by a catalyst in order to rearrange the exhaust gas components into products including water and carbon dioxide.

A search was conducted on the subject matter of this specification in the U.S. Patent and Trade Mark Office. As a result of the search, the following U.S. patents were noted: 3,053,612; 3,257,163; 3,259,453; 4,117,082; 4,189,404; 4,221,768; 4,293,447; 4,374,047 and 4,414,139.

U.S. Patent 3,053,612 issued on Sep 11, 1962 for "protection of Catalyst in Conversion of Lead Contaminated Waste Products". This patent teaches a method for eliminating products of incomplete combustion from internal combustion engine exhaust gases containing reducible lead compounds which has the following steps. The gases are first passed through a mixture of free metal above lead in the electromotive series and an alkaline constituent selected from the group consisting of the alkali metal carbonates and the oxides, carbonates and the oxides, carbonates and hydroxides of the alkaline earth metals to remove lead compounds from the gases. In a second step, the exhaust gases are contacted minus their lead content in an admixture with air with a lead-sensitve oxidation catalyst at an oxidizing temperature.

U.S. patent 3,257,163 issued on June 21, 1966 for "Method of Treating Automobile Exhaust Gases". This patent teaches a process for treatment of automobile exhaust gases produced by burning leaded petrol. The process includes the steps of adding air to the gases and passing them continuously throughout operation of the automobile into contact with a scavenger selected from the group consisting of the vanadates of alkali metals, alkaline earth metals, aluminium, copper, iron, cobalt, nickel, manganese, cerium and chromium, and a catalyst selected from the group consisting of manganochromia-manganite; oxides, chromites, manganites of copper, iron, cobalt, nickel, cadmium, zinc, bismuth and cerium; and precious metal catalysts selected from the group consisting of platinum, rhodium, palladium and ruthenium.

U.S. patent 2,259,453 issued on July 5, 1966 for "Method and Apparatus for Treating Exhaust Gases of Internal Combustion Engines". This patent is similar to the aforementioned 3,257,163 patent, and it has the same inventor.

U.S. patent 4,117,082 issued on September 26, 1978 for "Method of Completely Oxidizing Carbon Monoxide". This patent discloses a catalyst useful to purify exhaust gases from motor vehicles and the like comprising $SnO_2$ and at least one of Pt, Pd, Rh, Ir and Ru added thereto to ensure improved activity.

U.S. patent 4,189,404 issued on February 19, 1980 for "Catalyst and Process for Its Preparation". This patent describes macrosized catalysts suitable for promoting chemical reactions especially to reduce pollutants in waste gas streams. The catalysts have one or more metal components, especially a platinum group metal component, combined with a high surface area, refractory oxide support on a relatively catalytically inactive carrier.

U.S. patent 4,221,768 issued on September 9, 1980 for "Catalyst for Purifying Exhaust and Waste Gases". This patent teaches a catalyst containing three significantly different oxide groups.

U.S. patent 4,293,447 issued on October 6, 1981 for "Process for Repairing Plate-Shaped Denitrating Catalyst". This patent disclosed a plate-shaped denitrating catalyst comprising a metal net, a finely divided porous carrier retained on the metal net with a binder covering the metal net, and an active component supported on the carrier.

U.S. patent 4,374,047 issued on February 15, 1983 for "Process for Application of a Catalytically Active Coating Containing Platinum, Palladium or Rhodium or Their Mixtures to a Carrier and Product Made by Said Process". In the process disclosed in the patent for applying a coating containing platinum and/or palladium to the surface of a porous catalyst carrier, the depth of penetration was controlled by preloading the carrier with a determined amount of aqueous solution containing ammonium chloride.

U.S. patent 4,414,139 issued on November 8, 1983 for "Catalyst Carriers for Purification of Waste Gas and Process for Preparing the Same". This patent disclosed catalyst carrier for purification of waste gas which comprises a carrier comprising a calcined clay material composed of lithium oxide, aluminum oxide and silicon dioxide. The patent states the desired proportions of these materials.

GB-A-2,070,958 discloses a catalyst for use in exhaust gas purification unit. The catalyst is formed by mixing alumina and titanium dioxide and applying it to a substrate of ceramic or metallic material in the form of a slurry and thereafter the catalyst is impregnated with a solution countaining platinum.

According to the present invention there is provided a method of increasing the operational life of a catalyst which may be deactivated by lead, which method comprises the steps of forming a catalyst support structure having an outer layer of titanium dioxide which covers the entire surface area of the catalyst support structure and which acts as a catalyst deactivation protective material, depositing on the titanium dioxide a catalyst which can be deactivated by lead; and causing to flow over the catalyst support a stream of exhaust gases generated by burning a lead containing fuel in a combustion process, the lead contained in the exhaust gases reacting with the catalyst deactivation protection material in preference to reacting with, and thereby deactivating, the catalyst.

Preferably the catalyst support structure is formed essentially of titanium dioxide.

The invention will now be further described, by way of example, by reference specific embodiments.

The invention teaches a method increasing the operational life of a catalyst which may be deactivated by lead. In particular, the method taught is one in which a sacrificial material is used to react with the lead so that the lead does not react with the catalyst being used.

The method of this invention is initiated by forming a catalyst support structure. Skilled artisans are well aware of the many catalyst support structures which are available. The millions of automobiles currently being used in the United States which have catalyst devices thereon indicate the sophisticated level of technology known to skilled artisans in the manufacture of catalyst support structures.

Normally catalyst support structures are made from a form of aluminum oxide because this material has been found to be the most acceptable. However, the method of this invention envisages that other materials known to skilled artisans, including metallic substrates, may be employed as the basic catalyst support structure.

After the catalyst support structure has been formed, titanium dioxide is deposited on the catalyst support structure. The invention envisages that substantially the entire surface area of the catalyst support structure is covered with a titanium dioxide layer. This titanium dioxide layer is a layer which acts as a catalyst deactiviation protective material. Titanium dioxide is a protective material in that it will preferentially react with any lead in the ambient around it compared to commonly used washcoat material, e.g. $Al_{2O3}$, so that catalyst materials are protected from the lead. In such a manner, the catalyst material is protected from reaction with lead which would cause its deactivation.

The titanium dioxide may be deposited on the catalyst support structure from an organic or inorganic salt thereof as is well known. There are many different methods of obtaining titanium on the surface of a suitable catalyst support structure. Once the titanium has been placed on the support structure, it is oxidized in order to obtain the titanium dioxide which acts as a catalyst deactivation protective material.

As stated above, it is an important in the present invention that substantially the entire surface area of the catalyst support structure be covered by titanium dioxide. One may assure such coverage by carrying out a titanium dioxide deposition step in a repeated fashion so that one or more layers of titanium dioxide are built up on the catalyst support structure. This action would, of course, assure that substantially the entire surface area of the catalyst support structure has the necessary titanium dioxide deposited thereon.

Once the catalyst deactivation protective material has been built up on the catalyst support structure, then a catalyst may be deposited thereon. This catalyst would in fact be deposited on the titanium dioxide which acts as a protective material therefor. The deposition of catalyst material is well known in the art as is typified by the fact that catalyst materials of many types and varieties are employed in the automotive catalysts in use on millions of vehicles at the present time. Therefore, no further discussion of the actual manner in which deposition of catalyst materials is carried out appears warranted as such deposition is well known in the art. The materials that need particular protection from deactivation by lead include platinum, palladium, rhodium, ruthenium, rhenium, etc.

After the catalyst has been deposited on the catalyst support structure having the catalyst deactivation protective material thereon, a stream of exhaust gases is flowed thereover. This stream of exhaust gases is a stream generated by burning a lead containing fuel in a combustion process such as in an internal combustion engine associated with an automobile. The lead contained in the fuel may only be a trace amount of lead. Any lead contained in the exhaust gases preferentially reacts with the catalyst deactivation protective material. The lead preferentially reacts with the titanium dioxide because at that operating temperature it forms pbTiO$_3$. Because the lead preferentially reacts with the titanium dioxide, the amount of lead that can react with active noble metals is significantly reduced and therefore the catalyst is not deactivated and remains functional for carrying out its catalytic role in association with the exhaust gases passing thereover.

As an alternate to the method described above, the catalyst support structure may be formed entirely of titanium dioxide.

## Claims

1. A method of increasing the operational life of a catalyst which may be deactivated by lead, which method comprises the steps of forming a catalyst support structure having an outer layer of titanium dioxide which covers the entire surface area of the catalyst support structure and which acts as a catalyst deactivation protective material, depositing on the titanium dioxide a catalyst which can be deactivated by lead; and causing to flow over the catalyst support a stream of exhaust gases generated by burning a lead containing fuel in a combustion process, the lead contained in the exhaust gases reacting with the catalyst deactivation protection material in preference to reacting with, and thereby deactivating, the catalyst.

2. A method as claimed in Claim 1, wherein the catalyst support structure is formed essentially of titanium dioxide.

## Patentansprüche

1. Verfahren zur Verlängerung der Lebensdauer eines evtl. durch Blei desaktivierten Katalysators, dadurch gekennzeichnet, daß es aus den Schritten: Bildung einer Katalysatorträgerstruktur mit einer äußeren, die gesamte Oberfläche der Katalysatorträgerstruktur bedeckenden Schicht aus Titandioxid, die als Schutzmaterial gegen Katalysatordesaktivierung wirkt, Abscheidung eines durch Blei desaktivierbaren Katalysators auf dem Titandioxid sowie Überleiten eines durch das Verbrennen eines bleihaltigen Treibstoffs in einem Verbrennungsverfahren erzeugten Abgasstroms über den Katalysatorträger, wobei das in dem Abgas enthaltene Blei vorzugsweise mit dem Schutzmaterial gegen Katalysatordesaktivierung reagiert und nicht mit dem Katalysator, wodurch dieser desaktiviert würde, besteht.

2. Verfahren nach Anspruch 1, dadurch gekennzeichnet, daß die Katalysatorträgerstruktur im wesentlichen aus Titandioxid aufgebaut ist.

## Revendications

1. Procédé permettant d'accroître la durée de vie utile d'un catalyseur qui peut être désactivé par le plomb, ce procédé comprenant les opérations consistant à former une structure de support de catalyseur comportant une couche extérieure de dioxyde de titane qui recouvre la surface spécifique entière de cette structure de support de catalyseur et qui sert de matière protectrice vis-à-vis de la désactivation du catalyseur, à déposer sur le dioxyde de titane un catalyseur qui peut être désactivé par le plomb et à faire s'écouler par-dessus le support de catalyseur un courant de gaz d'échappement produits en faisant brûler un carburant contenant du plomb suivant un processus de combustion, le plomb contenu dans les gaz d'écnappement faisant l'objet d'une réaction avec la matière de protection vis-à-vis de la désactivation du catalyseur de préférence à une réaction avec le catalyseur qu'il désactiverait ainsi.

2. Procédé suivant la revendication 1, dans lequel la structure de support du catalyseur est formée essentiellement de dioxyde de titane.